Europäisches Patentamt

European Patent Office

Office européen des brevets

(11) Publication number: **0 047 666**
**B1**

(12) **EUROPEAN PATENT SPECIFICATION**

(45) Date of publication of patent specification: **17.07.85**

(21) Application number: **81304100.1**

(22) Date of filing: **08.09.81**

(51) Int. Cl.⁴: **H 04 N 9/79,** H 04 N 5/783,
G 11 B 5/58

(54) **Video signal reproducing apparatus.**

(30) Priority: **09.09.80 JP 125080/80**

(43) Date of publication of application:
**17.03.82 Bulletin 82/11**

(45) Publication of the grant of the patent:
**17.07.85 Bulletin 85/29**

(84) Designated Contracting States:
**AT DE FR GB NL**

(56) References cited:
**EP-A-0 009 237
DE-A-2 514 324
DE-A-2 549 364
FR-A-2 435 777
GB-A-1 186 907
GB-A-2 037 530
US-A-3 538 244
US-A-4 024 572**

(73) Proprietor: **SONY CORPORATION
7-35 Kitashinagawa 6-Chome Shinagawa-ku
Tokyo 141 (JP)**

(72) Inventor: **Kaminaga, Kozo
3-810, 4-3011-18, Iriya
Zama-shi Kanagawa-ken (JP)**
Inventor: **Suzuki, Yoshinori
4-13-1, Asahi-cho
Atsugi-shi Kanagawa-ken (JP)**
Inventor: **Wakisaka, Yoshiaki
4-13-1, Asahi-cho
Atsugi-shi Kanagawa-ken (JP)**

(74) Representative: **Haigh, Charles Roy et al
J.A. KEMP & CO. 14 South Square Gray's Inn
London WC1R 5EU (GB)**

EP 0 047 666 B1

Courier Press, Leamington Spa, England.

## Description

The invention relates to a video signal reproducing apparatus having a circuit device for detecting correctly one of the color difference signals of a color subcarrier signal contained in a PAL or SECAM color television signal reproduced from a recorded medium by the system.

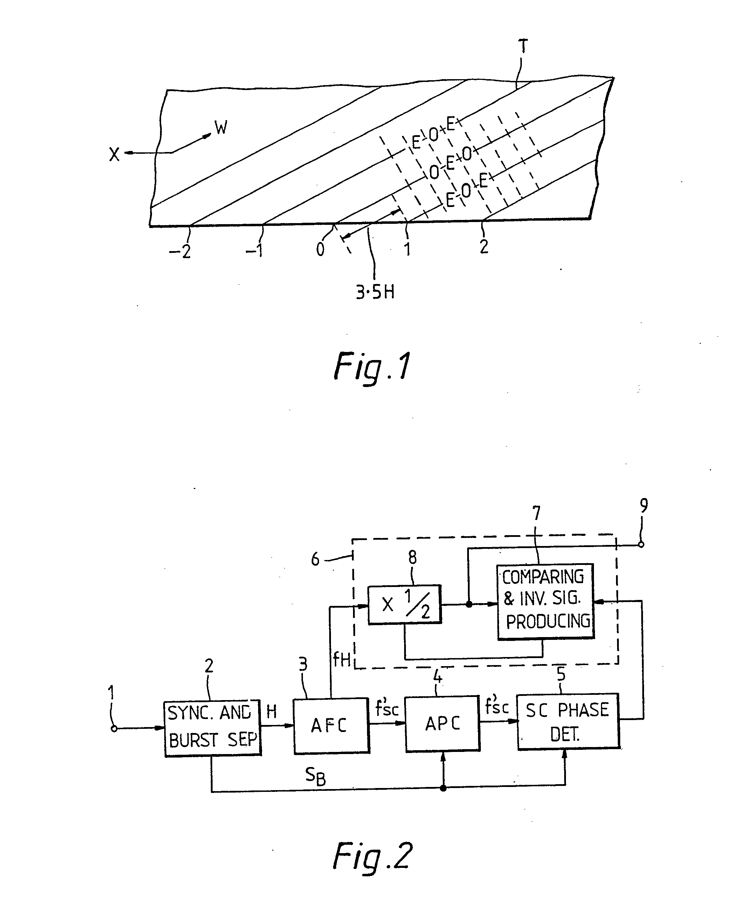

The recording format commonly named the "C-format" has been proposed as the SMPTE standard for video tape recorders for broadcasting use. When a PAL color television signal is recorded on a magnetic tape by means of a video tape recorder which follows the above-mentioned C-format for recording, the pattern of recorded tracks on which the color video signal is recorded is as shown in Figure 1 of the accompanying drawings. In Figure 1, T indicates the recorded tracks, −2, −1, 0, 1 and 2 are track numbers, X shows the direction of movement of the magnetic tape and W shows the direction of scanning by a magnetic head. Since one frame period of a PAL color television signal contains 625 line periods, during which the phase of the R-Y component of the color subcarrier signal is shifted by 180 degrees at every line period so as to be +(R-Y) and −(R-Y) in alternate line periods and adjacent recorded tracks are formed with a line period alignment (H alignment) with a difference of 3.5 line periods between mutually corresponding line periods on two successive recorded tracks, if +(R-Y) and −(R-Y) are represented as "O" and "E", respectively, the "O" and the "E" face each other on each two successive recorded tracks. In reproduction of the PAL color television signal recorded in such a manner, it is necessary to compensate the color video signal reproduced from the tape for a time base error with the help of a time base corrector in order to transform the same into a video signal which has the correct phase of color signal component complying with the broadcasting regulations, and in the time base corrector, it is necessary always to detect correctly the phase of the R-Y component, namely, +(R-Y) or −(R-Y).

Further, where a SECAM color television signal is recorded on magnetic tape by such a video tape recorder in a recording pattern as shown in Figure 1 and reproduced from the tape it is also necessary in the time base corrector to distinguish correctly between R-Y and B-Y components of the reproduced color subcarrier signal for the same reason as mentioned above in the case of the PAL color television signal.

In order to comply with the above described requirements, it has been previously proposed to provide the video tape recorder with a circuit device as shown in Figure 2. In Figure 2, reference numeral 1 stands for an input terminal to which the color video signal reproduced from the tape is supplied as an input signal; 2 for a synchronizing signal separating cirucit for extracting a synchronizing signal and a burst signal from the reproduced color video signal; 3 for an automatic frequency control circuit; 4 for an automatic phase control circuit; 5 for a subcarrier phase detecting circuit; 6 for an inertial circuit comprising a comparing and inverting signal producing circuit 7 and a divider 8; and 9 for an output terminal.

A horizontal sync signal H and the burst signal $S_B$ are extracted from the color video signal supplied to the input terminal 1 by the sync signal separating circuit 2. A horizontal scanning signal $f_H$ and a subcarrier signal $f_{sc}$ are generated using the horizontal sync signal H as a reference in the automatic frequency control circuit 3. The phase of the subcarrier signal $f_{sc}$ is not yet fixed at the output of the automatic frequency control circuit 3 but is fixed at the automatic phase control circuit 4 so as to have the same phase as the burst signal $S_B$ which is also supplied to the automatic phase control circuit 4. The subcarrier signal having its phase locked by the burst signal $S_B$ is shown as $f'_{sc}$ and this subcarrier signal $f'_{sc}$ is supplied to the subcarrier phase detecting circuit 5 where the level of the subcarrier signal $f'_{sc}$ is discriminated between "H" or "L" at the repetitive periods determined by the burst signal $S_B$; that is, the "O" or the "E" as mentioned above is detected as disclosed in detail later. The frequency of the horizontal scanning signal $f_H$ is divided by two by the divider 8 and appears at the output terminal 9 as an output signal. The frequency-divided horizontal scanning signal is alx supplied to the comparing and inverting signal producing circuit 7 and compared in phase with the output of the subcarrier phase detecting circuit 5. The circuit 7 produces an inverting signal and supplies it to the divider 8 when the phase of the divided horizontal scanning signal does not coincide with the phase of the output of the subcarrier phase detecting circuit 5. The phase of the output of the divider 8 is inverted by the inverting signal supplied to the divider 8 and, as a result, the phase of the output signal obtained at the output terminal 9 is corrected. Even if the input signal supplied to the input terminal 1 is momentarily interrupted due to a drop out of the reproduced color video signal or the input signal does not contain the burst signal $S_B$ momentarily at the period of vertical synchronous signal, the internal circuit 6 is operative to hold the phase information obtained prior to such a momentary interruption.

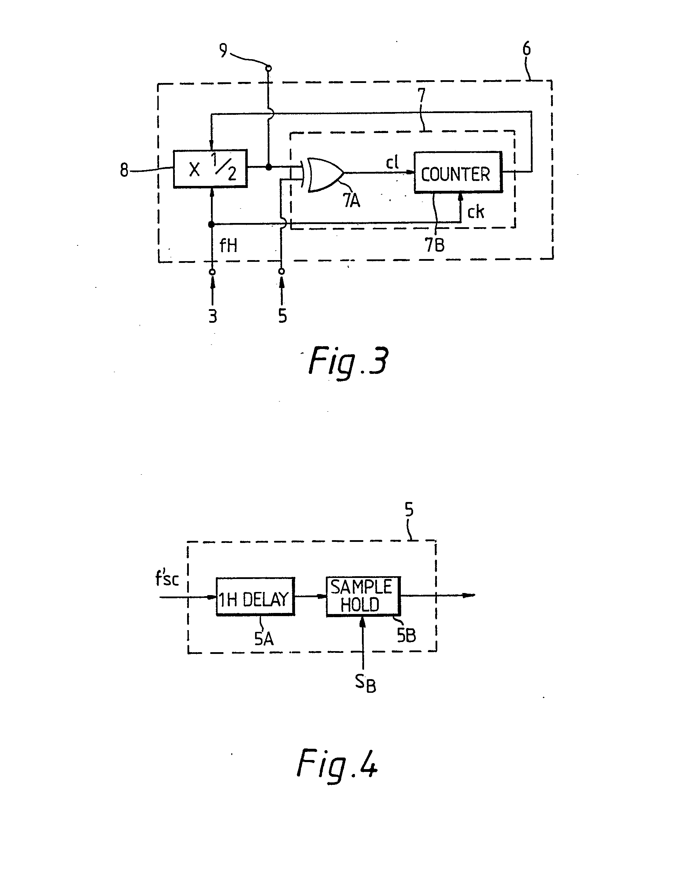

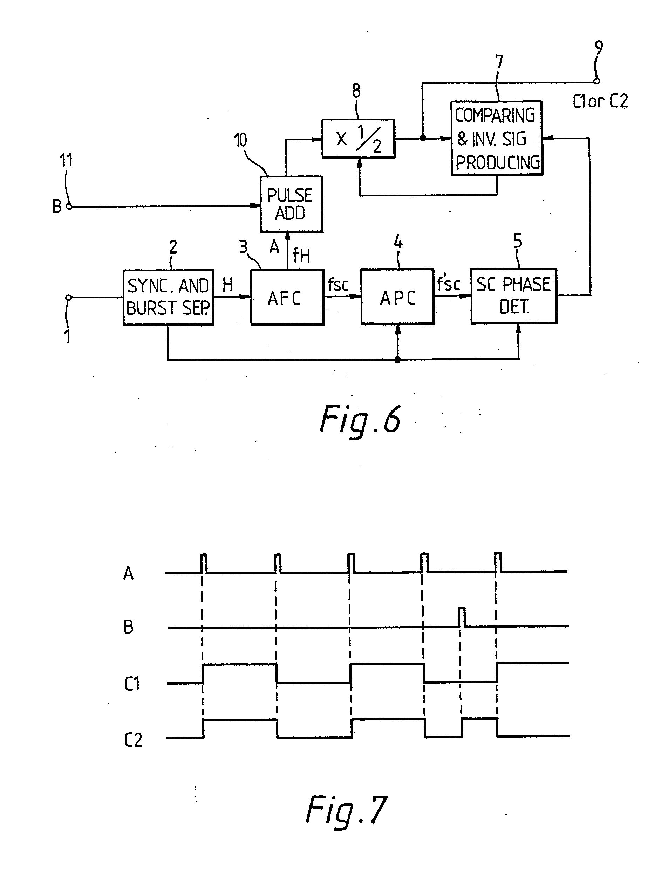

The circuit shown in Figure 3 can be used as the inertial circuit 6 in Figure 2, for example. In Figure 3, 7A is an exclusive OR circuit and 7B is a counter, and they together form the comparing and inverting signal generating circuit 7. When the output signal representing the "O" or "E" at the output terminal 9 coincides with the signal representing the "O" or "E" from the subcarrier phase detecting circuit 5, the exclusive OR circuit 7A produces its output and the counter 7B is reset with the output of the exclusive OR circuit 7A. On the other hand, when the output signal at terminal 9 does not coincide with the signal from the subcarrier phase detecting circuit 5, the counter 7B is not reset but continuous to count at every line period each pulse of the horizontal scanning signal $f_H$ and produces the inverting signal to invert the phase of the output of the divider 8 when the cumulative count reaches a preset value. Consequently, the correction in the phase of the output signal obtained at the output terminal 9 is done with a lag of plural line periods corresponding to the preset value for the counter 7B.

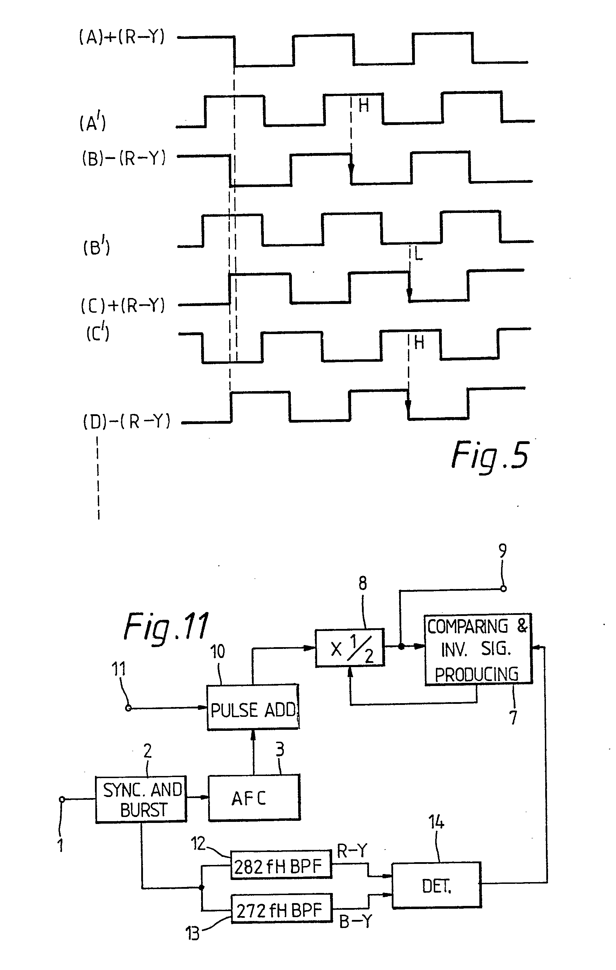

Figure 4 shows one example of the subcarrier phase detecting crcuit 5 shown in Figure 2. In Figure 4, 5A is a delay circuit which is operative to delay the subcarrier signal $f'_{sc}$ by one line period regardless of variations in frequency of the subcarrier signal $f'_{sc}$ and 5B is a sample and hold circuit which detects the phase of the output of the delay circuit 5A at the leading or trailing edge of the burst signal $S_B$.

The operation of the circuit shown in Figure 4 will be explained with the help of the timing chart shown in Figure 5. As shown in Figure 5, the phase of the subcarrier $f'_{sc}$, which is locked to coincide with the phase of the burst signal $S_B$, is shifted in each successive line period shown as (A), (B), (C) and (D) and, after the subcarrier signal $f'_{sc}$ is delayed by one line period by the delay circuit 5A, its phase is shown as (A'), (B') and (C'). The levels of the delayed subcarrier signal having phases shown as (A'), (B') and (C') detected at each falling edge of the burst signal $S_B$, the phase of which coincides with the phase of the subcarrier signal $f'_{sc}$ shown as (A), (B), (C) and (D), take "H", "L", "H",—in each successive line period, and it is understood that when the detected level is "H", the burst signal $S_B$ has the phase which corresponds to the phase −(R-Y) of the R-Y component, that is, the phase of the R-Y component in the reproduced color video signal at that time is −(R-Y), and when the detected level is "L", the burst signal $S_B$ has the phase which corresponds to the phase +(R-Y) of the R-Y component, that is, the phase of the R-Y component in the reproduced color video signal at that time is +(R-Y). Since the burst signal $S_B$ extracted from the reproduced color video signal at the synchronous signal separating circuit 2 is supplied to the sample and hold circuit 5B, operation as explained with the help of the timing chart of Figure 5 can be achieved in the circuit shown in Figure 4.

In GB—A—2 030 346, for the purpose of slow, still, fast forward and reverse reproduction at tape speeds different from the recording tape speed, a head tracking control system commonly called Automatic Scan Tracking (AST) or Dynamic Tracking (DT) has been employed in the video tape recorder. In such a head tracking control system, a rotary reproducing head is attached to a certain edge portion of a plate made of piezoelectric ceramics which is commonly called a "bimorph", and is moved in the direction perpendicular to the recorded tracks on the tape or to the scanning direction of the head so that the head correctly follows the recorded tracks; it will be appreciated that when scanning at a tape speed different from the recording speed the head motion is not parallel to the tracks. Using AST or DT, reproduction of the recorded signal is achieved without undesirable noise arising at guard bands between the recorded tracks. Considering the reproduction in the video tape recorder employing the head tracking control system mentioned above with reference to the pattern of the recorded tracks shown in figure 1, when the reproducing head is moved into the track with the number "±2N" (n is an integer) from the track with the number "O", discontinuity in the phase of the R-Y component in the reproduced color video signal arises due to this movement of the reproducing head and therefore the correct detection of the phase of the R-Y component cannot be performed by the inertial circuit 6 in the previously proposed circuit device as shown in Figure 2. This is a serious defect or drawback inherent in that device.

The present invention is intended to remedy the defect just mentioned relating to the previously proposed video tape recorder. According to the present invention there is provided a video signal reproducing apparatus for reproducing apparatus for reproducing signals recorded along a plurality of tracks disposed in side by side relation on a record medium using a producing head adapted for scanning motion relative to the tracks, the apparatus comprising a moving device for moving the reproducing head in the direction substantially perpendicular to its scanning direction, a control circuit for controlling said moving device to make said reproducing head scan on a selected recorded track, and a color information producing circuit for obtaining information about the phase of a color signal component at every line period from the output of the reproducing head, characterised by an error prevention circuit responsive to an output of said control circuit which indicates whether movements which the moving device is controlled to make select tracks are such as would cause the phase information at the output of said colour information producing circuit to be in error and for applying, when necessary, a corrective signal to said colour information circuit to prevent the output thereof from being in error. The video tape recorder employing the AST or DT head tracking control is provided with a detecting circuit for detecting the condition of the above mentioned "±2N" before the movement of the reproducing head into the track with the number "±2N" from the track with the number "O" in order to supply with an appropriate control voltage to the bimorph to which the reproducing head is attached.

Accordingly, using the detected output of this detecting circuit, it is possible to anticipate the discontinuity in the phase of the R-Y component mentioned above and to alter forcibly the phase of the output of the inertial circuit so as not to make an error in phase detection. The present invention is thus readily implemented in the TRs having AST or DT.

The invention will be further described by way of example, with reference to the accompanying drawings in which:—

Figure 1 is an illustration showing a pattern of recorded tracks on which a video signal of the PAL color type is recorded;

Figure 2 is a block diagram showing a circuit device for detecting the phase of a color signal component in a reproduced video signal;

Figure 3 is a block diagram showing an example of an inertial circuit shown in igure 2;

Figure 4 is a block diagram showing an example of a subcarrier phase detecting circuit also shown in Figure 2;

Figure 5 is a timing chart used for explaining the operation of the subcarrier phase detecting circuit shown in Figure 4;

Figure 6 is a block diagram showing an important part of one embodiment of the present invention adapted for reproducing a PAL color television signal;

Figure 7 is a timing chart used for explaining the operation of the embodiment shown in Figure 6;

Figure 8 is a block diagram showing an example of a DT head tracking control system employed in a video tape recorder to which the present invention can be applied;

Figure 9 is an illustration showing the tracing situation on a tape by a reproducing head when the ratio of tape replay to tape recording speed is 2.25:1.

Figure 10 is an illustration showing deviations of a bimorph to which the reproducing head is attached in the tracing situation shown in Figure 9; and

Figure 11 is a block diagram showing an important part of another embodiment of the present invention adapted for reproducing a SECAM color television signal.

Figure 6 shows part of one embodiment of the present invention. In the circuit device shown in Figure 6, a pulse adding circuit 10 is provided between the automatic frequency control circuit 3 and the divider 8, and 11 is a control terminal to which a detected signal obtained in relation to "$\pm 2N$" is supplied; that is the input terminal 11 receives a pulse when a track jump of "$\pm 2N$" tracks is about to occur. The remaining portions are the same as the circuit device shown in Figure 2. The output of the automatic frequency control circuit 3 supplied to the pulse adding circuit 10 is shown at A in Figure 7 and, on the basis of this output, the output signal shown at $C_1$ in Figure 7 is obtained at the output terminal 9. In such a situation, when the anticipated "$\pm 2N$" jump signal as shown with B in Figure 7 is supplied to the control terminal 11, the phase of the output of the divider 8 is inverted and therefore the output signal appearing at the output terminal 8 is altered as shown at $C_2$ in Figure 7. As a result of this, the error in phase detection caused by the discontinuity in the phase of the R-Y component is prevented. Thus the "$\pm 2N$" jump signal is used for maintaining the correct detection of the phase of the R-Y component.

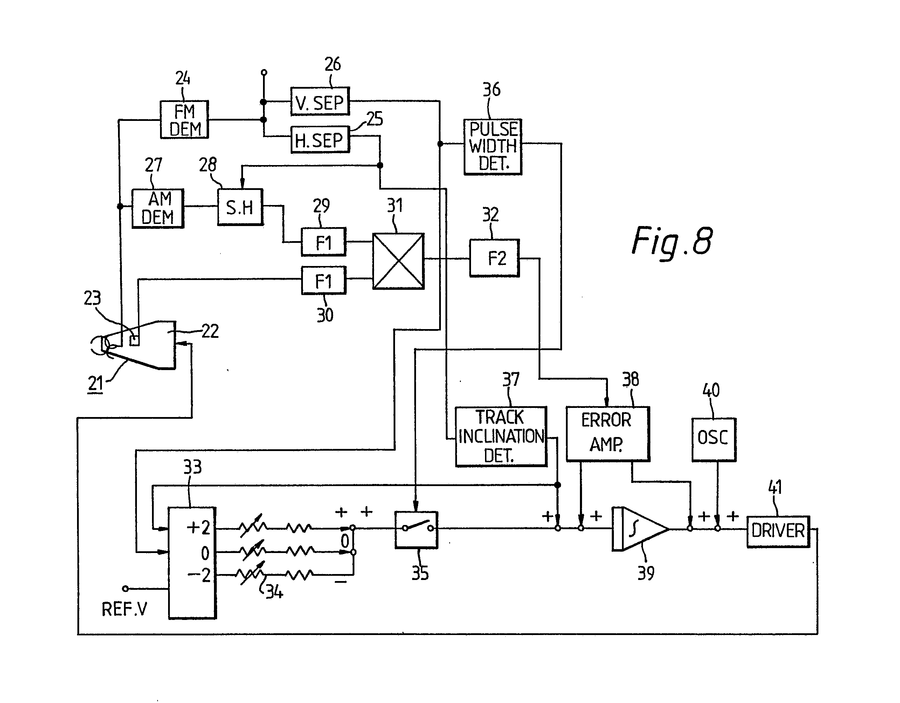

Now, an example of the above mentioned head tracking control system commonly called AST or DT employed in the video tape recorder to which the present invention can be applied, which is called DT, will be described in conjunction with Figure 8. In Figure 8, there is shown: a reproducing head 21; a moving device 22 utilizing, for example, a bimorph for moving the reproducing head 21 in the direction perpendicular to the recorded tracks on the tape or to its scanning direction; a vibration detector 23 such as a strain gauge for detecting the vibration of the moving device 22; a frequency discriminator 24 for demodulating the output of the reproducing head 21, the demodulated output from which is carried forward as the reproduced color video signal and simultaneously used for extracting the sync signal therefrom in the system; a horizontal sync signal separating circuit 25; a vertical sync signal separating circuit 26; an amplitude detector 27 for detecting the envelope of the output of the reproducing head 21; a sample and hold circuit 28 for sampling and holding the respective level of the said envelope at times corresponding to each horizontal sync signal 27; band pass filters 29 and 30 having a pass band covering the region around the frequency of the vibration of the moving device 22 and its side band; a multiplier 31 for detecting the mutual relation between the mechanical vibration of the reproducing head 21 and variations in the envelope of the reproduced color video signal; a low pass filter 32 for eliminating undesirable high frequency components contained in the output of the multiplier 31; a jump logic circuit 33 for generating a jump pulse, in which the jump pulse is set in accordance with information as to the inclination of the recorded track obtained from a track inclination detecting circuit 37 mentioned below and information about differences in phase between the reproduced vertical sync signal from the vertical sync signal separating circuit 26 and a reference vertical sync signal REF.V; a group of resistors 34 which receives a current pulse from the terminal designated "+2" when a track skip by the reproducing head over two advanced tracks is made, a negative current pulse from the terminal "−2" when a track skip in the retarded direction is made and no current pulse when no track skip is made; an analogue gate 35 which is controlled to come ON only during the periods when the track traced by the reproducing head changes; a pulse width determining circuit 36 which is triggered by the reproduced vertical sync signal from the vertical sync signal separating circuit 26 and supplied with a pulse having a predetermined width, for example, 0.6 milliseconds to the gate 35; a track inclination detecting circuit 37 which produces a voltage varying in response to variations in the intervals between successive pulses of the reproduced horizontal sync signal H, namely, a voltage varying in proportion to the degree of inclination of the recorded track, and supplies it to the jump logic circuit 33 and also to an input end of an integrator 39 mentioned below after converting into a current output; an amplifier 38 for amplifying the output of the low pass filter 32 and supplying the amplified output to both of the input and output ends of the integrator 39 in addition to signals thereat; the integrator 39 which integrates the sum of the outputs of the gate 35, track inclination detecting circuit 37 and amplifier 38; an oscillator 40 for causing the vibration of the moving device 22 provided for the reproducing head 21; a driver 41 for amplifying the sum of the outputs of the amplifier 38, integrator 39 and oscillator 40, and driving the moving device 22 with these amplified outputs. The circuit including the above mentioned parts 24, 25, 37, 39 and 41 detects the information regarding the inclination of the recorded track to produce a control signal in response to the degree of the inclination of the recorded track and controls slanting movement of the moving device 22 to make the reproducing head 21 scan accurately on the recorded track. This circuit connection is operative to achieve quick scanning angle correction particularly in response to rapid variations in the running speed of the tape. The parts 27, 28, 29, 23, 30, 31, 32, 38, 39 and 40 form a tracking servo control loop in which the moving device 22 is vibrated to make the reproducing head 21 follow the track deviations detected from the mutual relation between the waveforms of vibrations of the reproducing head 21 and variations in the reproduced color video signal. Further, parts 26, 33, 34, 35 and 36 determine the direction and length of skip movement of the reproducing head in accordance with the interval between successive pulses of the reproduced horizontal sync signal and the phase of the vertical sync signal, and drive the moving device 22 to give the skip movement to the reproducing head 21.

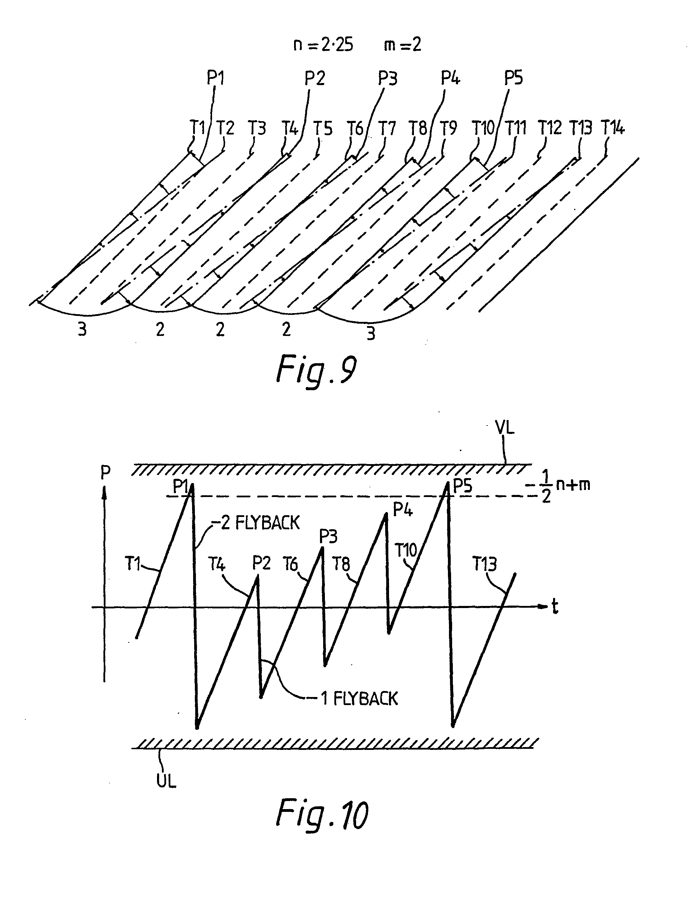

The skip movement of the reproducing head in the system shown in Figure 8 will now be explained in conjunction with Figure 9 and Figure 10. Figure 9 shows the tracing pattern over the tape described by the reproducing head when the ratio n:1 of replay to recording speed is 2.25:1, that is, when replaying the tape with the tape speed multiplied by 2.25 and Figure 10 shows the deviations of the bimorph employed in the moving device 22 in the tracing situation shown in Figure 9, which corresponds to the waveform of a bimorph driving voltage. As shown in Figure 9, each of the scanning traces by the reproducing head 21 shown with dashed and dotted lines has an error in inclination of 1.25 track pitches (n−1=2.25−1=1.25 pitches) relative to the tracks $T_1$, $T_2$, - - - -, in replay with the tape speed multiplied by 2.25. Accordingly, the moving device 22 is supplied with an inclination correcting voltage so as to have an inclination correction to deviate the reproducing head 21 by 1.25 track pitches during each scanning period for one track. Further, since the scanning on the track with a skip with a minimum length of 1 track pitch is performed, it is necessary for the moving device 22 to have a track jump to deviate the reproducing head from the end portion of a certain track to the beginning portion of the next track as shown in Figure 10, and the moving device 22 is supplied also with a flyback voltage so as to achieve the track jump. In this case, the pitch of the track jump (a jump pitch) depends on the ratio n:l of tape replay to tape recording speed, and when n is not integer, one obtains the equation

$$n = \frac{l \cdot x + m \cdot y}{x + y}$$

where

$$n+1 > l > n > m > n-1$$

and x, y, l and m are integers, x and y being the number of times the same tracks are scanned, and two integers l and m in this equation represent the jump pitches. For example, when n equals 2.25, l, m, x and y equal 3, 2, 1 and 3, respectively. Consequently, in this example, first a track jump of three track pitches is performed once and then a track jump of two track pitches is performed three times repeatedly. The numbers shown at the bottom of Figure 9 indicate the numbers of the tracks jumped in each track jump.

The condition for selecting the above mentioned flyback m and m−1 is determined as described below. As already described, the moving device 22 is required to be deviated by a distance corresponding to the inclination correction for |n−1| track pitches and it is further required to be deviated by a distance corresponding to a phase correction of a maximum ±1/2 track pitches for correcting differences in phase between the scanning trace by the reproducing head and the track. Consequently, the total deviation P required is shown as follows;

$$P = |n-1| + 1 \text{ (pitches)}.$$

When the moving device 22 is deviated upward and downward from a central position, lines $V_L$ and $U_L$ in Figure 10, which indicate the deviations of +1/2 {|n−1|+1} from the central position, respectively, show the maximum deviation required. Thus, the condition for the most appropriate deviation is to deviate the reproducing head 21 within the area limited by the lines $V_L$ and $U_L$.

When the deviation of the reproducing head at the end portion of the track which has been scanned (or a distance between the position of the reproducing head which scans the track without control to be deviated and the track at the end portion of the track) is P, where the flyback of m−1 (a short track jump) from the end portion of the track which has been scanned is done to deviate the reproducing head 21 to the beginning portion of the next track to be scanned and the reproducing head scans this next track with the inclination correction for |n−1|, an anticipated position P′ of the deviated reproducing head 21 at the end of this next track is shown as follows:

$$P'=P-(m-1)+(n-1)=P-m-n,$$

where

$$n \geq 1.$$

Accordingly, when $P'=P+n-m$ does not exceed the above mentioned limiting line $V_L$ ($P=1/2\ n$), the flyback of $m-1$ is appropriate; however, when $P'$ exceeds the limiting line $V_L$, a further flyback of $m$ (a long track jump) is required. That is, it is required to disciminate between $P<-1/2\ n+m$ and $P>-1/2\ n+m$, and to make the flyback of $m-1$ if the discriminated result is $P<-1/2\ n+m$ and to make the flyback of $m$ if the discriminated result is $P>-1/2\ n+m$. Further, if $n<1$, since the flyback of $m$ is a short track jump, the anticipated position $P'$ of the reproducing head 21 with the deviation by the inclination correction for $|n-1|$ and the flyback of $m$ at the end portion of the track is shown as follows:

$$P'=P-m+n-1.$$

Accordingly, when $P'=P-m+n$ does not exceed the limiting line $U_L$($P=1/2\ n-1$), the flyback of $m$ is appropriate, and when $P'$ exceeds the limiting line $U_L$, the flyback of $m-1$ is appropriate.

As described above, the direction and length of skip movement is determined by the jump logic circuit 33 in Figure 8 and the skip movement of the reproducing head 21 is performed. In this case, when the reproducing head jumps to the track "$\pm 2n$", although phase error is caused due to the line period alignment with a difference of 3.5 line periods between mutually correspondingly line periods on two successive tracks, it is possible as disclosed already to compensate for this phase error immediately by utilizing the detected signal obtained in relation to "$\pm 2n$" as done in the circuit device of the present invention shown in Figure 6.

Although the above disclosed embodiment is intended to correctly detect the phase of the R-Y component of the PAL color television signal, the present invention can be applied also for reproducing the SECAM color television signal. Figure 11 shows part of another embodiment of the present invention which is intended to correctly detect the phase of the R-Y component of the SECAM color television signal, in the same manner as Figure 6. Since two subcarriers having frequencies corresponding to line frequency multiplied by 282 ($282f_H$) and the line frequency multiplied by 272($272f_H$), respectively, are used for the R-Y and B-Y components, respectively, in the SECAM color television signal, these R-Y and B-Y components can easily be detected by means of a filter 12 through which the frequency $282f_H$ can pass, a filter 13 through which the frequency $272f_H$ can pass and a detecting circuit 14 for detecting the output of the filter 12 or 13 provided in the circuit device shown in Figure 11. As for Figure 11, the remaining portions other than the filters 12 and 13 and the detecting circuit 14 are the same as the circuit device shown in Figure 6, so that the explanation about them are omitted hereat.

Although the detected signal obained in relation to "$\pm 2n$" is utilized for correct phase detection in the above disclosed embodiments, it is generally possible to utilize a detected signal obtained in relation to "$\pm 2n+1$" with the same result. Further, although the pulse adding circuit 10 is set to operate with the detected signal obtained in relation to "$\pm 2n$" so as to add one pulse to the input of the divider 8 in the circuit devices shown in Figure 6 and Figure 11, it is also possible to use the detected signal obtained in relation to "$\pm 2n+1$" and set the pulse adding circuit 10 so as not to operate when the detected signal obtained in relation to "$\pm 2n+1$" is supplied thereto.

As disclosed above in detail, in the video signal reproducing system in accordance with the present invention, the reproducing head provided for scanning the recorded tracks on which the color video signal is recorded is moved in the direction substantially perpendicular to its scanning direction so as to scan a selected recorded track and the information about the phase of the color signal component is obtained at every line period from the reproduced video signal, the information about the selected recorded track to be scanned by the reproducing head is utilized for preventing the information about the phase of the color signal component from being in error, and, therefore, the time delay as caused in the prior art, by for example, the inertial circuit and so on can be avoided and the correct information about the phase of color signal component is reliably obtained.

**Claims**

1. A video signal reproducing apparatus. for reproducing apparatus for reproducing signals recorded along a plurality of tracks disposed in side by side relation on a record medium using a producing head adapted for scanning motion relative to the tracks, the apparatus comprising a moving device (22) for moving the reproducing head (21) in the direction substantially perpendicular to its scanning direction; a control circuit (33—41) for controlling said moving device to make said reproducing head scan on a selected recorded track, and a color information producing circuit (Figure 6; Figure 11) for obtaining information about the phase of a color signal component at every line period from the output of the reproducing head, characterised by an error prevention circuit (10, 11) responsive to an output (B) of said control circuit which indicates whether movements which the moving device is controlled to make to select tracks are such as would cause the phase information at the output of said colour information producing circuit to be in error and for applying, when necessary, a corrective signal to said colour information circuit to prevent the output thereof from being in error.

2. Apparatus according to claim 1 characterised in that the error prevention circuit is arranged to apply a correcting effect to the colour information producing circuit depending upon the phase sequence of said colour signal component in successive tracks selected to be scanned such that it produces the correct colour signal component phase information.

3. Apparatus according to claim 1 or 2 characterised by a track-skip control circuit for producing a signal relating to the number of tracks to be skipped by the reproducing head, the track skip control circuit being responsive to said signal to apply said correcting effect to the colour information producing circuit.

4. Apparatus according to claim 1, 2 or 3 characterised in that the color information producing circuit comprises an inertial circuit so as to continue to supply color signal component phase information in the event of temporary input drop-out.

5. Apparatus according to claim 4 characterised in that the inertial circuit comprises a first counting arrangement having an output which changes state in accordance with horizontal sync pulses of the reproduced video signal and represents the colour signal component phase information, a second counting arrangement for counting pulses derived from a comparison of the first counting arrangement output state and a signal whose state represents the phase of a detected reproduced color component sub-carrier of the video signal to produce an inverting signal and means responsive to the inverting signal to adjust the output state of the first counting arrangement.

6. Apparatus according to claim 5 characterised in that the adjusting means is arranged to adjust the output state of the first counting arrangement by adjusting its counting sequence.

7. Apparatus according to claim 5 or 6 characterised in that the error prevention circuit is arranged to adjust the counting sequence of the first counting arrangement to maintain the correct colour signal component phase information.

8. Apparatus according to claim 5 or 6 wherein the error prevention circuit is arranged to adjust the counting sequence of the first counting arrangement by applying pulses thereto in addition to the horizontal sync pulses or by inhibiting the application of such horizontal sync pulses thereto.

**Patentansprüche**

1. Videosignal-Wiedergabegerät zum Wiedergeben von Signalen, die längs einer Vielzahl von Spuren aufgezeichnet sind, welche Spuren Seite an Seite auf einem Aufzeichnungsmedium angeordnet sind, wobei in dem Wiedergabegerät ein Wiedergabekopf benutzt wird, der dazu bestimmt ist, eine Abtastbewegung relativ zu den Spuren auszuführen, und wobei das Gerät eine Bewegungseinrichtung (22) zum Bewegen des Wiedergabekopfes (21) in einer Richtung, die im wesentlichen senkrecht zu seiner Abtastrichtung liegt, eine Steuerschaltung (33—41) zum Steuern der Bewegungseinrichtung, um den Wiedergabekopft eine ausgewählte aufgezeichnete Spur abtasten zu lassen, und eine Farbinformations-Erzeugungsschaltung (Fig. 6; Fig. 11) zum Gewinnen von Information betreffend die Phase einer Farbsignalkomponente aus dem Ausgangssignal des Wiedergabekopfes bei jeder Zeilenperiode enthält, gekennzeichnet durch eine Fehlerverhütungsschaltung (10, 11), die auf ein Ausgangssignal (B) der Steuerschaltung anspricht, das anzeigt, ob Bewegungen, zu deren Ausführen die Bewegungseinrichtung gesteuert wird, um zu bewirken, daß Spuren ausgewählt werden, derart beschaffen sind, daß die Phaseninformation an dem Ausgang der Farbinformations-Erzeugungsschaltung fehlerhaft gemacht wird, zum Abgeben eines korrigierenden Signals—falls dies erforderlich ist—an die Farbinformations-Erzeugungsschaltung, um zu verhüten, daß deren Ausgangssignal fehlerhaft ist.

2. Gerät nach Anspruch 1, dadurch gekennzeichnet, daß die Fehlerverhütungsschaltung derart beschaffen ist, daß sie abhängig von der Phasenfolge der Farbsignalkomponente in aufeinanderfolgenden Spuren, die ausgewählt sind, um abgetastet zu werden, eine korrigierende Wirkung derart ausübt, daß sie die korrekte Farbsignalkomponent-Phaseninformation erzeugt.

3. Gerät nach Anspruch 1 oder 2, gekennzeichnet, durch eine Spursprung-Steuerschaltung zum Erzeugen eines Signals, das sich auf die Anzahl von Spuren bezieht, die durch den Wiedergabekopf zu überspringen sind, wobei die Spursprung-Steuerschaltung auf das betreffende Signal anspricht, um die korrigierende Wirkung auf die Farbinformations-Erzeugungsschaltung auszuüben.

4. Gerät nach Anspruch , 2 oder 3, dadurch gekennzeichnet, daß Farbinformations-Erzeugungsschaltung eine Trägheitsschaltung enthält, um die Abgabe von Farbsignalkomponenten-Phaseninformation im Falle eines vorübergehenden Eingangssignalausfalls fortsetzen zu können.

5. Gerät nach Anspruch 4, dadurch gekennzeichnet, daß die Trägheitsschaltung eine erste Zählanordnung, die einen Ausgang hat, welcher seinen Zustand in Übereinstimmung mit Horizontalsynchronisierimpulsen des wiedergegebenen Videosignals ändert und die Farbsignalkomponenten-Phaseninformation repräsentiert, eine zweite Zählanordnung zum Abzählen von Impulsen, die aus einem Vergleich des Ausgangszustandes der ersten Zählanordnung mit einem Signal gewonnen werden, dessen Zustand die Phase eines erfaßten wiedergegebenen Farbkomponenten-Hilfsträgers des Videosignals repräsentiert, um ein Invertierungssignal zu erzeugen, und Mittel, die auf das Invertierungssignal ansprechen, um den Ausgangszustand der ersten Zählanordnung einzustellen, enthält.

6. Gerät nach Anspruch 5, dadurch gekennzeichnet, daß die Mittel zum Einstellen vorgesehen sind, um den Ausgangszustand der ersten Zählanordnung durch Einstellen von deren Zählfolge einzustellen.

7. Gerät nach Anspruch 5 oder 6, dadurch gekennzeichnet, daß die Fehlerverhütungsschaltung vorgesehen ist, um die Zählfolge der ersten Zählanordnung einzustellen, um so die korrekte Farbsignalkomponenten-Phaseninformation aufrechtzuerhalten.

8. Gerät nach Anspruch 5 oder 6, bei dem die Fehlerverhütungsschaltung vorgesehen ist, um die Zählfolge der ersten Zählanordnung durch Zuführen von Impulsen zu dieser zusätzlich zu den Horizontalsynchronisierimpulsen oder durch Sperren der Zuführung solcher Horizontalsynchronisierimpulse zu dieser einzustellen.

**Revendications**

1. Appareil de reproduction de signaux vidéo pour appareil de reproduction servant à reproduire des signaux enregistrés sur plusieurs pistes disposées côte à côte sur un support d'enregistrement à l'aide d'une tête de reproduction conçue pour effecteur un mouvement de balayage par rapport aux pistes, l'appareil comprenant un dispositif de déplacement (22) servant à déplacer la tête de reproduction (21) dans une direction sensiblement perpendiculaire à sa direction de balayage, un circuit de commande (33—41) servant à commander ledit dispositif de déplacement de façon à faire balayer une piste enregistrée sélectionnée par ladite tête de reproduction, et un circuit produisant des informations de couleur (figure 6; figure 11) servant à obtenir des informations sur la phase d'une composante du signal en couleur à chaque période de ligne à partir du signal de sortie de la tête de reproduction, caractérisé par un circuit d'empêchement d'erreur (10, 11) conçu pour répondre à un signal de sortie (B) dudit circuit de commande qui indique si les déplacements qu'il est commandé au dispositif de déplacement d'effectuer pour sélectionner des pistes sont ou non tels qu'ils amènent les informations de phase présentes sur la sortie dudit dispositif produisant des informations de couleur à être erronées et pour appliquer, si nécessaire, un signal de correction audit circuit d'information de couleur afin d'empêcher que son signal de sortie ne soit erronée.

2. Appareil selon la revendication 1, caractérisé en ce que le circuit d'empêchement d'erreur est conçu pour appliquer un effect de correction au circuit produisant des informations de couleur en fonction de la séquence de phases de ladite composante du signal en couleur dans les pistes successives sélectionnées pour être balayées de façon qu'il produise l'information de phase correcte sur la composante du signal en couleur.

3. Appareil selon la revendication 1 ou 2, caractérisé par un circuit de commande de saut de piste servant à produire un signal relatif au nombre de pistes à faire sauter par la tête de reproduction, le circuit de commande de saut de piste répondant audit signal en appliquant ledit effet de correction au circuit produisant les informations de couleur.

4. Appareil selon la revendication 1, 2 ou 3, caractérisé en ce que le circuit produisant des informations de couleur comprend un circuit inertiel de façon à continuer de délivrer les informations de phase sur la composante de signal en couleur dans le case d'une chute temporaire du signal d'entrée.

5. Appareil selon la revendication 4, caractérisé en ce que le circuit insertiel comprend un premier dispositif de comptage dont le signal de sortie change d'état en fonction des impulsions de synchronisation horizontale du signal vidéo reproduite et représente l'information de phase sur la composante du signal en couleur, un deuxième dispositif de comptage servant à compter les impulsions à partir d'une comparaison de l'état de sortie du premier dispositif de comptage et d'un signal dont l'état représente la phase d'une sous-porteuse détectée de la composante de couleur reproduite du signal vidéo afin de produire un signal d'inversion, et un moyen répondant au signal d'inversion en ajustant l'étant de sortie du premier dispositif de comptage.

6. Appareil selon la revendication 5, caractérisé en ce que le moyen d'ajustement est conçu pour ajuster l'état de sortie du premier dispositif de comptage en ajustant sa séquence de comptage.

7. Appareil selon la revendication 5 ou 6, caractérisé en ce que le circuit d'empêchement d'erreur est conçu pour ajuster la séquence de comptage du premier dispositif de comptage de manière à maintenir l'information de phase correcte sur la composante du signal en couleur.

8. Appareil selon la revendication 5 ou 6, où le circuit d'empêchement d'erreur est conçu pour ajuster la séquence de comptage du premier dispositif de comptage en lui appliquant des impulsions en plus des impulsions de synchronisation horizontale ou en empêchant l'application de ces impulsions de synchrisation horizontale.

Fig.1

Fig.2

*Fig.3*

*Fig.4*

Fig.5

Fig.11

Fig.6

Fig.7

Fig.8

$n = 2.25$    $m = 2$

*Fig.9*

*Fig.10*